# EUROPEAN PATENT SPECIFICATION

(11) **EP 3 393 155 B1**
(45) Date of publication and mention of the grant of the patent: **01.01.2020**
(21) Application number: 17192513.4
(22) Date of filing: 22.09.2017
(51) Int. Cl.: H04W 4/60, G06Q 30/02

(54) **POSITION-BASED SERVICE INFORMATION PROMPTING METHOD FOR SHARED VEHICLE, SYSTEM AND APP DEVICE**
POSITIONSBASIERTES DIENSTINFORMATIONSAUFFORDERUNGSVERFAHREN FÜR GEMEINSAM GENUTZTES FAHRZEUG, SYSTEM UND APP-VORRICHTUNG
PROCÉDÉ D'INVITE D'INFORMATIONS DE SERVICE BASÉ SUR LA POSITION POUR VÉHICULE PARTAGÉ, SYSTÈME ET DISPOSITIF D'APP

(30) Priority: 18.04.2017 CN 201710253473
(43) Date of publication of application: 24.10.2018
(73) Proprietor: Beijing Mobike Technology Co., Ltd., Beijing 100083 (CN)
(72) Inventor: ZHANG, Shilong, Haidian District Beijing, 100083 (CN); YANG, Yujie, Haidian District Beijing, 100083 (CN); ZHOU, You, Haidian District Beijing, 100083 (CN)
(74) Representative: Hübner, Gerd

(56) References cited:
- US-A1- 2015 168 150
- US-A1- 2016 359 980

## Description

### FIELD OF THE INVENTION

The present invention relates to shared vehicles, and more particularly, to a position-based service information prompting method for a shared vehicle, a shared vehicle system and an APP device for a shared vehicle.

### BACKGROUND OF THE INVENTION

Existing shared vehicles such as shared bicycles, shared motor vehicles, shared scooters and the like differ from ordinary vehicles mainly in the processes related to travel, such as finding a shared vehicle, unlocking the shared vehicle and the like. When a user uses a shared vehicle, if he/she needs to search for nearby service information, such as service information of nearby hospitals, nearby shopping malls, nearby schools or the like, the user needs to stop using the vehicle and/or switch to an APP or a website on a cell phone to acquire nearby service information. This is inconvenient for the user and not conducive for traffic safety.

Most existing position-based service methods can provide services only when the user is in a certain area, and do not consider the positional changes of the user. For example, when the user travels slowly, he/she may be searching for nearby services, but the prior art solution will not push service information near the user's position to the user at this time.

US 20161359980 A1 discloses a cloud system that includes one or more servers for communicating with vehicles and processing information received from vehicles and processing information sent to vehicles. The system processes instructions for establishing a communication link between a computing device associated with a vehicle and a server of the cloud system. The communication link is over a wireless network. The communication link is established in association with a user account that is managed by the cloud system. The communication link is configured to be established for one or more sessions. The system enables receiving, at the server, a plurality of actions associated with inputs made at the vehicle for the vehicle when associated with the user account, and the plurality of actions being received during the one or more sessions. Then, updating, by the server, data associated with the user account to identify certain ones of the plurality of actions at the vehicle. The server is configured to generate an instruction to apply a setting at the vehicle. One or more of the plurality of actions for the vehicle made during the one or more sessions are analyzed to identify a pattern that is indicative of a preference for a setting by a user of the vehicle that used the vehicle via the user account when the actions were made. The server then sends to the user account the instruction to apply the setting for the vehicle. The computing device associated with the vehicle enables acceptance and application of the setting.

### SUMMARY OF THE INVENTION

An objective of the present invention is to provide a novel technical solution of a position-based service information prompting method for a shared vehicle.

According to the first aspect of the present invention, there is provided a position-based service information prompting method for a shared vehicle, comprising: acquiring a user's travel event information assuming that a user needs nearby service information, the user's travel event information comprising information of successful unlocking and/or successful locking, or information that a travel speed is lower than a preset speed threshold, or information that the travel speed is lower than the preset speed threshold and the state sustains for a preset first time threshold, or information that a radius of a travel area is smaller than a preset radius threshold and the state sustains for a preset second time threshold, or information that the travel speed is lower than a preset ratio of a maximum travel speed and the state sustains for a preset third time threshold; acquiring a user's geographic position information corresponding to occurrence of the user's travel event information; if there is available position-based service information around a user's position, sending the information to an APP device for a shared vehicle; and prompting the service information around the user's position on a map interface of the APP device for the shared vehicle.

Optionally, the method further comprises sending a prompting sound or a vibration by the APP device for the shared vehicle to prompt the user to check the service information around the user's position.

According to the second aspect of the present invention, there is provided a shared vehicle system, comprising an APP device for a shared vehicle, a shared vehicle and a server, wherein the APP device for the shared vehicle comprises: a position information sending unit configured to send a user's geographic position information to the server; a receiving unit configured to receive position-based service information around a user's position sent by the server when a user's travel event information assuming that a user needs nearby service information occurs; and a display unit configured to prompt the service information on a map interface; and the server comprises: an acquiring unit configured to acquire the user's travel event information and the user's geographic position information corresponding to the occurrence of the user's travel event information; and a calculating unit configured to calculate and provide available position-based service information around the user's position, for sending. The user's travel event information comprises information of successful unlocking and/or successful locking, or information that a travel speed is lower than a preset speed threshold, or information that the travel speed is lower than the preset speed threshold and the state sustains for a preset first time threshold, or information that a radius of a travel area is smaller than a preset radius threshold and the state sustains for a preset second time threshold, or information that the travel speed is lower than a preset ratio of a maximum travel speed and the state sustains for a preset third time threshold.

Optionally, the shared vehicle comprises a communication unit configured to send the information of successful unlocking and/or successful locking such that the server acquires the user's travel event information.

Optionally, the APP device for the shared vehicle comprises: a prompting unit configured to send a prompting sound or a vibration to prompt the user to check the service information around the user's position.

According to the third aspect of the present invention, there is provided an APP device for a shared vehicle, comprising a memory and a processor, wherein the memory stores instructions for controlling the processor to perform operations so as to execute the method as mentioned above.

A technical effect of the present invention is that position-based service information can be provided with reference to the user's travel event information so that better user experience is provided when the user uses the shared vehicle.

The inventor of the preset invention finds that, in the prior art, there is no such a solution in which a user's travel event information is judged and position-based service information is provided to the user based on the user's travel event information. Therefore, the technical task to be achieved by the present invention or the technical problem to be solved by the present invention has not been conceived or anticipated by those skilled in the art, and thus, the present invention is a novel technical solution.

Other features and advantages of the present invention will become apparent from the following detailed description of exemplary embodiments of the present invention with reference to the accompanying drawings.

### BRIEF DESCRIPTION OF THE DRAWINGS

The accompanying drawings, which are incorporated in and constitute a part of the description, illustrate embodiments of the present invention and, together with the description thereof, serve to explain the principles of the present invention.
Fig. 1 is a schematic view of an overall architecture of a shared vehicle system
Fig. 2 is a flow chart of a position-based service information prompting method for a shared vehicle provided by Embodiment 1 of the present invention.
Fig. 3 is a block diagram of a shared vehicle system provided by Embodiment 2 of the present invention.
Fig. 4 is a block diagram of a shared vehicle system provided by Embodiment 3 of the present invention.
Fig. 5 is a block diagram of an APP device for the shared vehicle provided by Embodiment 4 of the present invention.
Fig. 6 is a block diagram of the hardware configuration of an APP device for the shared vehicle provided by Embodiment 5 of the present invention.

### DETAILED DESCRIPTION OF THE EMBODIMENTS

Various exemplary embodiments of the present invention will now be described in detail with reference to the accompanying drawings. It should be noted that the relative arrangement, numerical expressions and numerical values of the components and steps set forth in these examples do not limit the scope of the invention unless otherwise specified.

The following description of at least one exemplary embodiment is in fact merely illustrative and is in no way intended as a limitation to the present invention and its application or use.

Techniques, methods, and apparatus known to those of ordinary skill in the relevant art may not be discussed in detail but where appropriate, the techniques, methods, and apparatus should be considered as part of the description.

Among all the examples shown and discussed herein, any specific value should be construed as merely illustrative and not as a limitation. Thus, other examples of exemplary embodiments may have different values.

It should be noted that similar reference numerals and letters denote similar items in the accompanying drawings, and therefore, once an item is defined in a drawing, and there is no need for further discussion in the subsequent accompanying drawings.

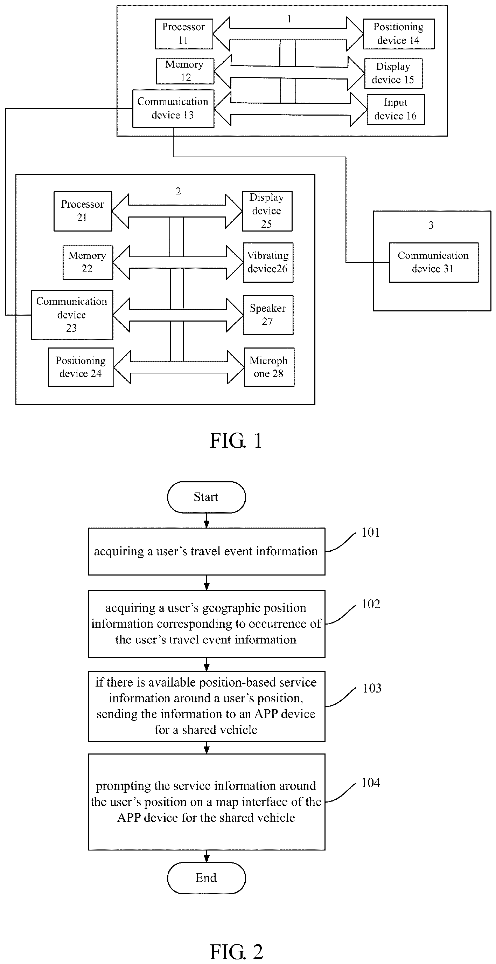

As shown in Fig. 1, the shared vehicle system of the present invention includes a server 1, an APP device 2 for a shared vehicle and the shared vehicle 3.

The server 1 may be a blade server and so on. In a specific example, the server 1 may be a computer. In another specific example, the server 1 may include a processor 11, a memory 12, an interface device 13, a communication device 14, a display device 15, an input device 16 and the like, as shown in Fig. 1. For example, the processor 11 may be a central processing unit CPU, a micro processing unit MPU or the like. For example, the memory 12 includes a ROM (Read-only Memory), a RAM (Random Access Memory), a non-volatile memory of a hard disk, and the like. For example, the interface device 13 includes a USB interface, a serial interface and the like. For example, the communication device 14 may perform wired or wireless communication. For example, the display device 15 may be a liquid crystal display screen. For example, the input device 16 may include a touch screen, a keyboard and the like.

The APP device 2 of the shared vehicle may be a portable computer, a cell phone, a tablet computer etc. As shown in Fig. 1, the APP device 2 of the shared vehicle may include a processor 21, a memory 22, a communication device 23, a positioning device 24, a display device 25, a vibrating device 26, a speaker 27, a microphone 28, and the like. For example, the processor 21 may be a central processing unit CPU, a micro processing unit MPU or the like. For example, the memory 22 may include a ROM (Read-only Memory), a RAM (Random Access Memory), a non-volatile memory of a subject disk, and the like. For example, the communication device 23 may perform wired or wireless communication. For example, the positioning device 24 may be a GPS positioning device, a Beidou positioning device, or the like. For example, the display device 25 may be a liquid crystal display screen. For example, the vibrating device 26 may include a motor or the like. The user may output/input voice information via the speaker 27 and the microphone 28.

The shared vehicle 3 includes a communication device 31 for establishing a wireless communication connection, such as 2G communication, short message communication and the like, with the server 1. In another specific example, the communication device 31 is further used for establishing a short distance communication connection (not shown in Fig. 1), such as Bluetooth communication and the like, with the APP device for the shared vehicle.

The shared vehicle system shown in Figure 1 is only illustrative, and is by no means intended to limit the present invention, its use or application. When applied in the embodiments of the present invention, the memory 12 of the server 1 is used for storing instructions for controlling the processor 11 to perform operations so as to execute any of the position-based service information prompting methods for a shared vehicle provided by the embodiments of the present invention. In addition, the memory 22 of the APP device 2 of the shared vehicle is used for storing instructions for controlling the processor 21 to perform operations so as to execute any of the position-based service information prompting methods for a shared vehicle provided by the embodiments of the present invention.

Those skilled in the art should understand that although Figure 1 shows multiple devices for the server 1 and the APP device 2 of the shared vehicle, respectively, the present invention may only relate to some of them. For example, the server 1 may only relate to the processor 11 and the memory 12, and the APP device 2 of the shared vehicle may only relate to the processor 21 and the memory 22. Those skilled in the art may design the instructions according to the solutions disclosed by the present invention. How the instructions control the processor to perform operations is a common technology in the art and will not be explained in detail herein.

Fig. 2 is a flow chart of a position-based service information prompting method for a shared vehicle provided by Embodiment 1 of the present invention. The method comprises the following steps executed in sequence.

Step 101 includes acquiring a user's travel event information.

Step 102 includes acquiring a user's geographic position information corresponding to the occurrence of the user's travel event information.

Step 103 includes: if there is available position-based service information around a user's position, sending the information to an APP device for a shared vehicle.

Step 104 includes prompting the service information around the user's position on a map interface of the APP device for the shared vehicle.

The user's travel event information of the present invention may comprise information of successful unlocking. If so, it can be assumed that the user may need service information near the area where the vehicle is unlocked. The user's travel event information of the present invention may comprise information of successful locking. If so, it can be assumed that the user may need service information near the parking area. The user's travel event information may comprise information that a travel speed is lower than a preset speed threshold. For example, if the user travels at a speed of lower than 8 km/h or 4 km/h or the user stops traveling, it can be assumed that the user is searching for nearby service information. The user's travel event information may comprise information that a travel speed is lower than the preset speed threshold and the state sustains for a preset first time threshold. For example, if the user travels at a speed of lower than 8 km/h, and this state sustains for 2 minutes or 4 minutes or 10 minutes, or the user stops traveling for 2 minutes, it can be assumed that the user is searching for nearby service information.

The user's travel event information may comprise information that a radius of a travel area is smaller than a preset radius threshold and the state sustains for a preset second time threshold. For example, if the user's travel radius is always less than 100 meters in 10 minutes, it can be assumed that the user is searching for a certain service within an area of this radius. At this time, the APP device for the shared vehicle may be triggered to prompt the service information near the user's position on a map interface. The user's travel event information may comprise information that the travel speed is always lower than a preset ratio of a maximum travel speed and the state sustains for a preset third time threshold. For example, in recent 2 minutes, if the travel speed is always lower than 50% or 30% or other preset ratio of a maximum travel speed, it can be assumed that the user may need nearby service information. At this time, the APP device for the shared vehicle may be triggered to prompt the service information near the user's position on the map interface.

Examples of the above user's travel event information are only illustrative. Those skilled in the art may make various changes under the teaching of the above examples. The numbers in the above examples are only illustrative. Those skilled in the art may set different numbers according to the actual conditions.

As an optimization of the above solution, the APP device for the shared vehicle may output a prompting sound or a vibration to prompt the user to check nearby service information. For example, the APP device for the shared vehicle itself may output a prompting sound or a vibration or may trigger other devices connected therewith (such as a bracelet or a sound box) to do so.

If the user's travel event information occurs, it is possible that the user needs nearby service information. At this time, prompting the service information on a map interface of the user's APP device for the shared vehicle will bring much convenience to the user. The user does not need to stop using the vehicle, nor does he/she need to switch to an APP other than an APP for the shared vehicle or website on a cell phone to acquire nearby service information.

The present invention further provides a shared vehicle system for realizing the above prompting method. First, an example will be given to describe how the service information near the user's position is prompted when locking and/or unlocking is/are successful.

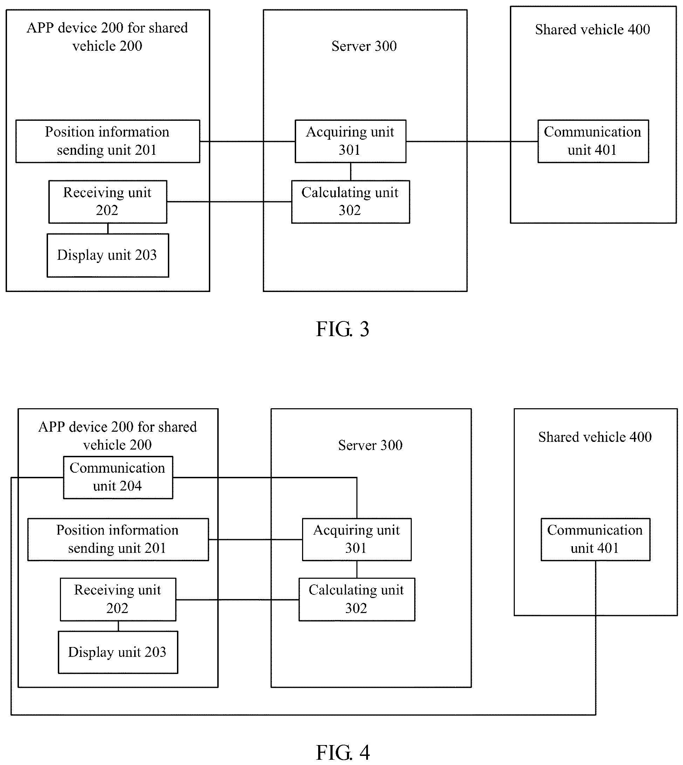

Fig. 3 is a block diagram of a shared vehicle system provided by Embodiment 2 of the present invention. An APP device 200 for a shared vehicle comprises a position information sending unit 201, a receiving unit 202, and a display unit 203, wherein the receiving unit 202 and the display unit 203 are connected with each other. The server 300 includes an acquiring unit 301 and a calculating unit 302 connected to the acquiring unit 301. The calculating unit 302 is connected with the receiving unit 202 of the APP device for the shared vehicle. A shared vehicle 400 includes a communication unit 401 connected to the acquiring unit 301 of the server 300. The server 300 may be connected to the APP device 200 for the shared vehicle and the shared vehicle 400 using a prior art approach. The communication units of the server 300 and of the APP device 200 of the shared vehicle are not shown in Fig. 3.

In the APP device 200 of the shared vehicle, the position information sending unit 201 is configured to send a user's geographic position information to the server, the receiving unit 202 is configured to receive position-based service information around a user's position sent by the server when a user's travel event information occurs, and the display unit 203 is configured to prompt the service information on a map interface.

In the server 300, the acquiring unit 301 is configured to acquire the user's travel event information and the user's geographic position information corresponding to the occurrence of the user's travel event information, and the calculating unit 302 is configured to calculate and provide available position-based service information around the user's position for sending.

It should be noted that the APP device for the shared vehicle in all the embodiments of the present invention may be an APP for a shared vehicle implemented by software or be a device for implementing the APP device for the shared vehicle, such as a cell phone, a PAD or the like, for operating an APP of the shared vehicle.

In this embodiment, a possible implementation procedure is as below. After a user successfully locks and/or unlocks a vehicle, the communication unit 401 of the shared vehicle 400 sends the travel event information to the acquiring unit 301 of the server 300. Then, the acquiring unit 301 acquires the user's geographic position information through the position information sending unit 201 of the APP device 200 of the shared vehicle, and sends the same to the calculating unit 302. The calculating unit 302 calculates and provides available position-based service information around the user's position for sending. The server 300 may send the above service information to the receiving unit 202 of the APP device 200 of the shared vehicle through a wireless communication network, for example. After the receiving unit 202 receives the above service information, the display unit 203 displays the service information on a map interface of the APP device 200 of the shared vehicle.

The information of the user's successful unlocking and/or successful locking may be sent by the shared vehicle to the server by other means. For example, the shared vehicle may send the information to the APP device for the shared vehicle, and the APP device for the shared vehicle transfers the information to the server. Fig. 4 shows a block diagram of a shared vehicle system of Embodiment 3 of such an implementation manner.

Embodiment 3 differs from Embodiment 2 in that the shared vehicle 400 may establish short distance communication with the APP device 200 of the shared vehicle. The communication unit 401 of the shared vehicle 400 sends the information of successful unlocking and/or successful locking to the communication unit 204 of the APP device 200 of the shared vehicle, which will transfer the information to the acquiring unit 301 of the server 300. The shared vehicle 400 may establish short distance communication with the APP device 200 of the shared vehicle.

In the shared vehicle systems provided by Embodiments 2 and 3, the methods of acquiring the user's position information by the APP device for the shared vehicle and the server may be solutions of the prior art, which will not be limited. A travel event related to a travel speed and a travel radius may, for example, include four situations, i.e.: a travel speed is lower than a preset speed threshold; or the travel speed is lower than the preset speed threshold and the state sustains for a preset first time threshold; or a radius of a travel area is smaller than a preset radius threshold and the state sustains for a preset second time threshold; or the travel speed is lower than a preset ratio of a maximum travel speed and the state sustains for a preset third time threshold. The travel speed and the travel radius may be calculated by the APP device for the shared vehicle based on the acquired position information and may be reported to the server, or they may be calculated by the server 300 based on the acquired position information. Determination of a travel event related to a travel speed and a travel radius may be performed by a calculating unit (not shown in Figs. 3-4) of the APP device for the shared vehicle based on the acquired speed information, or may be performed by the calculating unit 302 of the server 300 based on the acquired speed information.

Regarding a travel event related to a travel speed and a travel radius, as the user is traveling, he/she may not actively check his/her cell phone, PAD or the like, an optimized implementation process may be as below. The server 300 acquires travel event information relating to a travel speed, and sends the information to the receiving unit 202. After the APP device for the shared vehicle receives the travel event information relating to a travel speed, it controls its hardware to send a prompting sound or a vibration or triggers other devices connected with the APP device for the shared vehicle, such as a bracelet or a sound box, to output a vibration or a prompting sound.

Regarding a travel event of successful unlocking and/or successful locking, if the server determines that there is available service information near the user's position, after the APP device for the shared vehicle acquires the service information, a prompting sound or a vibration may be output in a similar manner to prompt the user to check his/her surrounding service information.

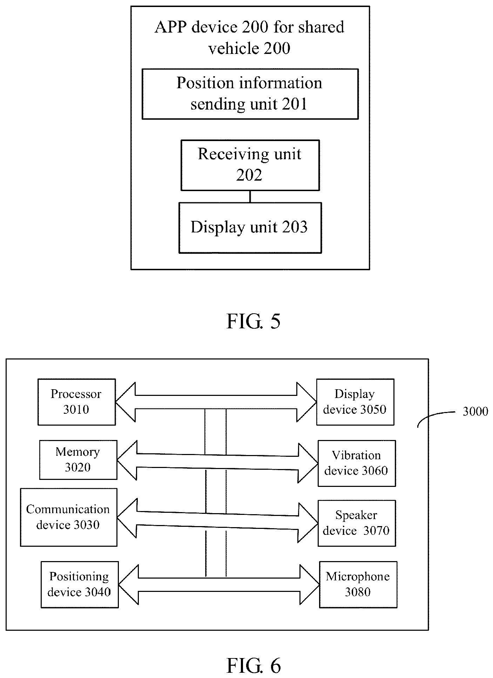

The present invention also provides an APP device for a shared vehicle. A block diagram of an exemplary Embodiment 4 of the APP device for the shared vehicle is shown in Fig. 5.

The APP device 200 of the shared vehicle comprises a position information sending unit 201, a receiving unit 202 and a display unit 203, as well as a positioning unit and a communication unit which are not shown in the drawings. The position information sending unit 201 is configured to send a user's geographic position information to the server. The receiving unit 202 is configured to receive position-based service information around a user's position sent by the server when a user's travel event information occurs. The display unit 203 is configured to prompt the service information on a map interface. The positioning unit is configured to acquire the user's geographic position. The communication unit is configured to establish a communication connection between the APP device 200 of the shared vehicle and the server 300, or between the APP device 200 of the shared vehicle and a shared vehicle.

The user's travel event information comprises information of successful unlocking and/or successful locking; or information that a travel speed is lower than a preset speed threshold; or information that the travel speed is lower than the preset speed threshold and the state sustains for a preset first time threshold; or information that a radius of a travel area is smaller than a preset radius threshold and the state sustains for a preset second time threshold; or information that the travel speed is lower than a preset ratio of a maximum travel speed and the state sustains for a preset third time threshold.

For those skilled in the art, the above position-based service information prompting method for a shared vehicle may be realized by hardware, software or a combination thereof. Based on the same inventive concept, Fig. 6 describes an APP device for a shared vehicle according to an embodiment of the present invention for performing the above position-based service information prompting method for a shared vehicle.

Fig. 6 is a block diagram of the hardware configuration of an embodiment capable of realizing the APP device for the shared vehicle of the present invention. The APP device for the shared vehicle 3000 includes a processor 3010, a memory 3020, a communication device 3030, a positioning device 3040, a display device 3050, a vibration device 3060, a speaker device 3070, a microphone 3080, etc.

The memory 3020 is configured to store instructions for controlling the processor 3010 to perform operations so as to perform any of the above-described position-based service information prompting methods for a shared vehicle.

The processor 3010 may be a central processing unit CPU, a micro central processing unit MCU or the like. The memory 3020 includes a ROM (Read-only Memory), a RAM (Random Access Memory), a non-volatile memory such as a hard disk and the like.

The communication device 3030 is configured to establish a communication connection (such as a 4G mobile communication network connection, a WIFI connection or the like) with a shared vehicle server.

The positioning device 3040 may be a GPS positioning device, a Beidou satellite positioning device or the like.

The display device 3050 may be a liquid crystal display screen, a touch display screen or the like.

The vibration device 3060 may include a motor, for example.

Voice information may be input/output via the speaker device 3070 and the microphone 3080.

The APP device for the shared vehicle shown in Figure 6 is only illustrative, and is by no means intended to restrict the present invention, its use or application. Those skilled in the art should understand that although Figure 6 shows multiple devices, the present invention may only relate to a part of them. Those skilled in the art may design the instructions according to the technical solutions of the present invention. How instructions control a processor to operate is a common technology in the art and will not be repeated herein.

It should note noted that the respective embodiments of the present description are described in a progressive manner, the focus of each embodiment illustrates the differences from other embodiments, and the same or similar parts among the embodiments may refer to one another. However, those skilled in the art should understand that the above embodiments may be used individually or in combination according to the needs. In addition, as the device embodiments correspond to the method embodiments, the description of the former is relatively simpler, and the related parts may refer to the corresponding parts of the method embodiments. The above-described system embodiments are only illustrative. The modules in these systems described as separate components may be or may not be physically separated.

Further, the flow charts and block diagrams in the drawings show the possible system architecture, functions and operations of the systems, methods and computer program products of multiple embodiments according to this disclosure. In this regard, each block in the flow charts and block diagrams may represent one module, or a part of a program segment or codes, which includes one or more executable instructions for realizing predefined logic functions. It should also be noted that in some alternative implementations, the function described in one block may be realized in a sequence different from that described in the drawings. For example, two consecutive blocks may be executed substantially in parallel, and may be executed in an inverse sequence, depending on the related functions. It should also be noted that each block in a block diagram and/or a flow chart and a combination of the blocks in a block diagram and/or a flow chart may be realized by a specific hardware-based system for performing a predefined function or action or may be realized by a combination of specific hardware and computer instructions.

The computer program products provided by the embodiments of this disclosure include computer-readable storage media storing program codes. The instructions included in the program codes may be used to perform the methods in the above-described method embodiments. The specific implementations may refer to the method embodiments and will not be repeated herein.

Those skilled in the art may clearly understand that for the sake of convenience and conciseness in description, the specific operation processes of the above-described systems, devices and units may refer to the corresponding processes in the above-described method embodiments and will not be repeated herein.

In the embodiments provided by the present application, it should be understood that the disclosed systems, devices and methods may be realized by other means. The above-described device embodiments are merely illustrative. For example, division of the units is only a logical functional division, and may be realized by other division manners in actual application. For example, multiple units or components may be combined or integrated into another system, or some features may be omitted or may not be executed. Further, the coupling or direct coupling or communication connection illustrated or discussed here may be realized through communication interfaces, and indirect coupling or communication connection between the devices or units may be electrical, mechanical or in other forms.

The units described as separated components may be or may not be physically separated. The components displayed as units may be or may not be physical units, may be located at the same place and may be distributed to multiple network units. A part or all of the units may be selected to realize the purposes of the solutions of the embodiments according to the actual needs.

In addition, the functional units in the embodiments of this disclosure may be integrated in a processing unit, or may exist as physically independent units. Two or more units may be integrated into one unit.

When the function is realized in a form of a software function unit and is sold or used as an independent product, it may be stored in a computer-readable storage medium. Based on such understandings, the technical solutions of this disclosure or the part thereof contributing to the prior art or a part thereof may be substantially reflected in the form of a software product. The computer software product is stored in a storage medium, and includes several instructions to cause a computer device (which may be a personal computer, a server or a network device) to perform all or part of the steps for performing the methods of the embodiments of this disclosure. The storage medium includes a USB disk, a mobile hard disk, a Read-only Memory, a Random Access Memory, a magnetic disk or an optical disk which can store program codes.

It can be appreciated that, while the terms "first", "second" and so on may be used herein to distinguish one entity or operation from another, it does not require or imply such a relation or sequence between these entities or operations. Further, the terms "include", "comprise" or any variation thereof are intended to cover an nonexclusive containing, such that a process, a method, an item or a device containing a series of elements not only includes these elements, but also includes other elements that are not set forth specifically, or also includes an inherent element of such a process, method, item or device. Without further limitation, an element defined by a phrase "include a" does not mean that other elements are excluded from the process, method, item or device.

The above are only preferred embodiments of this disclosure and is not intended to limit this disclosure. For those skilled in the art, this disclosure may have various modifications and changes. It should be noted that similar signs and letters in the following drawings represent similar items. Therefore, once defined in one drawing, an item may not be further discussed in the followed drawings.

While certain specific embodiments of this disclosure have been illustrated by way of example, it will be understood by those skilled in the art that the foregoing examples are provided for the purpose of illustration and are not intended to limit the scope of the present invention. The scope of the present invention is subject to the attached claims.

## Claims

1. A position-based service information prompting method for a shared vehicle (400), comprising:
acquiring a user's travel event information when assuming that a user needs nearby service information, the user's travel event information comprising information of successful unlocking and/or successful locking of the shared vehicle or information that a travel speed is lower than a preset speed threshold, or information that the travel speed is lower than the preset speed threshold and the state sustains for a preset first time threshold, or information that a radius of a travel area is smaller than a preset radius threshold and the state sustains for a preset second time threshold, or information that the travel speed is lower than a preset ratio of a maximum travel speed and the state sustains for a preset third time threshold;
acquiring a user's geographic position information corresponding to occurrence of the user's travel event information;
if there is available position-based service information around a user's position, sending the information to an APP device for the shared vehicle (200); and
prompting the service information around the user's position on a map interface of the APP device for the shared vehicle (200).

2. The prompting method according to claim 1, **characterized in** further comprising: sending a prompting sound or a vibration by the APP device for the shared vehicle (200) to prompt the user to check the service information around the user's position.

3. A shared vehicle system, comprising an APP device for a shared vehicle (200), a shared vehicle (400) and a server (300),
the APP device for the shared vehicle (200) comprises:
a position information sending unit (201) configured to send a user's geographic position information to the server (300);
a receiving unit (202) configured to receive position-based service information around a user's position sent by the server (300)when a user's travel event information assuming that a user needs nearby service information occurs; and
a display unit (203) configured to prompt the service information on a map interface; and
the server (300) comprises:
an acquiring unit (301) configured to acquire the user's travel event information and the user's geographic position information corresponding to occurrence of the user's travel event information; and
a calculating unit (302) configured to calculate and provide available position-based service information around the user's position, for sending,
wherein the user's travel event information comprises information of successful unlocking and/or successful locking of the shared vehicle, or information that a travel speed is lower than a preset speed threshold, or information that the travel speed is lower than the preset speed threshold and the state sustains for a preset first time threshold, or information that a radius of a travel area is smaller than a preset radius threshold and the state sustains for a preset second time threshold, or information that the travel speed is lower than a preset ratio of a maximum travel speed and the state sustains for a preset third time threshold.

4. The shared vehicle system according to claim 3, **characterized in that** the shared vehicle (400) comprises a communication unit (401) configured to send the information of successful unlocking and/or successful locking such that the server (300) acquires the user's travel event information.

5. The shared vehicle system according to claim 3 or 4, **characterized in that** the APP device for the shared vehicle (200) further comprises:
a prompting unit configured to send a prompting sound or a vibration to prompt the user to check the service information around the user's position.

6. An APP device for a shared vehicle (200), comprising a memory and a processor, wherein the memory stores instructions for controlling the processor to perform operations so as to execute the method of any of claims 1-2.

## Patentansprüche

1. Positionsbasiertes Dienstinformation-Hinweisverfahren für ein gemeinsam genutztes Fahrzeug (400), mit:
Übernehmen einer Reiseereignis-Information eines Benutzers, in der Annahme, dass ein Benutzer eine nahegelegene Dienstinformation benötigt, wobei die Reiseereignis-Information des Benutzers umfasst eine Information über ein erfolgreiches Entriegeln und/oder erfolgreiches Verriegeln des gemeinsamen Fahrzeugs oder eine Information, dass eine Reisegeschwindigkeit geringer ist als ein voreingestellter Geschwindigkeitsgrenzwert, oder eine Information, dass die Reisegeschwindigkeit geringer ist als der voreingestellte Geschwindigkeitsgrenzwert und der Status über einen voreingestellten ersten Zeitgrenzwert hinweg erhalten bleibt, oder eine Information, dass ein Radius eines Reisegebietes kleiner ist als ein voreingestellter Radiusgrenzwert und der Status über einen voreingestellten zweiten Zeitgrenzwert hinweg erhalten bleibt, oder eine Information, dass die Reisegeschwindigkeit geringer als ein voreingestelltes Verhältnis einer maximalen Reisegeschwindigkeit ist und der Status über einen voreingestellten dritten Zeitgrenzwert hinweg erhalten bleibt;
Übernehmen einer Geografische-Position-Information des Benutzers, die mit dem Auftreten der Reiseereignis-Information des Benutzers korrespondiert;
wobei die Information an eine App-Einrichtung für das gemeinsam genutzte Fahrzeug (200) gesendet wird, falls eine verfügbare positionsbasierte Dienstinformation um eine Position des Benutzers herum verfügbar ist; und
Hinweisen auf die um die Position des Benutzers herum vorhandene Dienstinformation auf einer Kartenoberfläche der App-Einrichtung für das gemeinsam genutzte Fahrzeug (200).

2. Hinweisverfahren nach Anspruch 1, gekennzeichnet ferner durch:
Senden eines Hinweistons oder einer Vibration durch die App-Einrichtung für das gemeinsam genutzte Fahrzeug (200), um den Benutzer aufzufordern, die um die Position des Benutzers herum vorhandene Dienstinformation zu prüfen.

3. System für ein gemeinsam genutztes Fahrzeug, mit einer App-Einrichtung für ein genutztes Fahrzeug (200), ein gemeinsam genutztes Fahrzeug (400) und einen Server (300),
wobei die App-Einrichtung für das gemeinsam genutzte Fahrzeug (200) umfasst:
eine Positionsinformation-Sendeeinheit (201), die so konfiguriert ist, dass diese eine Geografische-Position-Information des Benutzers an den Server (300) sendet;
eine Empfangseinheit (202), die so konfiguriert ist, dass diese eine positionsbasierte Dienstinformation um eine Position des Benutzers herum empfängt, die durch den Server (300) gesendet wird, wenn eine Reiseereignis-Information des Benutzers annehmen lässt, dass ein Benutzer eine auftretende nahegelegene Dienstinformation benötigt; und
eine Displayeinheit (203), die so konfiguriert ist, dass diese die Dienstinformation auf einer Kartenoberfläche aufruft; und der Server (300) umfasst:
eine Übernahmeeinheit (301), die so konfiguriert ist, dass diese die Reiseereignis-Information und die dem Auftreten der Reiseereignis-Information des Benutzers entsprechende Geografische-Position-Information des Benutzers übernimmt; und
eine Berechnungseinheit (302), die so konfiguriert ist, dass diese eine verfügbare positionsbasierte Dienstinformation um die Position des Benutzers herum berechnet und zum Senden bereitstellt,
wobei die Reiseereignis-Information des Benutzers umfasst eine Information eines erfolgreichen Entriegelns und/oder erfolgreichen Verriegelns des gemeinsam genutzten Fahrzeugs, oder eine Information, dass eine Reisegeschwindigkeit geringer ist als ein voreingestellter Geschwindigkeitsgrenzwert, oder eine Information, dass die Reisegeschwindigkeit geringer ist als der voreingestellte Geschwindigkeitsgrenzwert und der Status über einen voreingestellten ersten Zeitgrenzwert hinweg erhalten bleibt, oder eine Information, dass ein Radius eines Reisegebiets kleiner ist als ein voreingestellter Radiusgrenzwert und der Status für einen voreingestellten zweiten Zeitgrenzwert hinweg erhalten bleibt, oder eine Information, dass die Reisegeschwindigkeit geringer ist als ein voreingestelltes Verhältnis einer maximalen Reisegeschwindigkeit und der Status über einen voreingestellten dritten Zeitgrenzwert hinweg erhalten bleibt.

4. System für ein gemeinsam genutztes Fahrzeug nach Anspruch 3, **dadurch gekennzeichnet, dass** das gemeinsam genutzte Fahrzeug (400) eine Kommunikationseinheit (401) umfasst, die so konfiguriert ist, dass diese die Information des erfolgreichen Entriegelns und/oder erfolgreichen Verriegelns sendet, derart, dass der Server (300) die Reiseereignis-Information des Benutzers übernimmt.

5. System für ein gemeinsam genutztes Fahrzeug nach Anspruch 3 oder 4, **dadurch gekennzeichnet, dass** die App-Einrichtung für das gemeinsam genutzte Fahrzeug (200) ferner umfasst:
eine Hinweiseinheit, die so konfiguriert ist, dass diese einen Hinweiston oder eine Vibration sendet, um den Benutzer aufzufordern, die um die Position des Benutzers herum vorhandene Dienstinformation zu prüfen.

6. App-Einrichtung für ein gemeinsam genutztes Fahrzeug (200) mit einem Speicher und einem Prozessor, wobei der Speicher Befehle zum Steuern des Prozessors speichert, um Operationen durchzuführen, derart, dass das Verfahren nach einem der Ansprüche 1-2 ausgeführt wird.

## Revendications

1. Procédé d'invite d'informations de service basé sur la position pour un véhicule partagé (400), comprenant :
l'acquisition d'informations d'événement de déplacement d'un utilisateur lorsqu'il est supposé qu'un utilisateur a besoin d'informations de service à proximité, les informations d'événement de déplacement de l'utilisateur comprenant des informations de déverrouillage réussi et/ou de verrouillage réussi du véhicule partagé ou des informations indiquant qu'une vitesse de déplacement est inférieure à un seuil de vitesse prédéfini, ou des informations indiquant que la vitesse de déplacement est inférieure au seuil de vitesse prédéfini et que l'état se maintient pendant un premier seuil de temps prédéfini, ou des informations indiquant qu'un rayon d'une zone de déplacement est inférieur à un seuil de rayon prédéfini et que l'état se maintient pendant un deuxième seuil de temps prédéfini, ou des informations indiquant que la vitesse de déplacement est inférieure à un rapport prédéfini d'une vitesse de déplacement maximale et que l'état se maintient pendant un troisième seuil de temps prédéfini ;
l'acquisition d'informations de position géographique d'un utilisateur correspondant aux informations d'événement de déplacement de l'utilisateur se produisant ;
s'il existe des informations de service basé sur la position disponibles autour de la position d'un utilisateur, l'envoi des informations à un dispositif applicatif pour le véhicule partagé (200) ; et
l'invite des informations de service autour de la position de l'utilisateur sur une interface cartographique du dispositif applicatif pour le véhicule partagé (200).

2. Procédé d'invite selon la revendication 1, **caractérisé en ce qu'**il comprend en outre : l'envoi d'un son d'invite ou d'une vibration par le dispositif applicatif pour le véhicule partagé (200) pour inviter l'utilisateur à vérifier les informations de service autour de la position de l'utilisateur.

3. Système de véhicule partagé, comprenant un dispositif applicatif pour un véhicule partagé (200), un véhicule partagé (400) et un serveur (300),
le dispositif applicatif pour le véhicule partagé (200) comprend :
une unité d'envoi d'informations de position (201) configurée pour envoyer des informations de position géographique d'un utilisateur au serveur (300) ;
une unité de réception (202) configurée pour recevoir des informations de service basé sur la position autour de la position d'un utilisateur envoyées par le serveur (300) lorsque des informations d'événement de déplacement d'un utilisateur supposant qu'un utilisateur a besoin d'informations de service à proximité se produisent ; et
une unité d'affichage (203) configurée pour inviter les informations de service sur une interface cartographique ; et
le serveur (300) comprend :
une unité d'acquisition (301) configurée pour acquérir les informations d'événement de déplacement de l'utilisateur et les informations de position géographique de l'utilisateur correspondant aux informations d'événement de déplacement de l'utilisateur se produisant ; et
une unité de calcul (302) configurée pour calculer et fournir des informations de service basé sur la position disponibles autour de la position de l'utilisateur, pour un envoi,
dans lequel les informations d'événement de déplacement de l'utilisateur comprennent des informations de déverrouillage réussi et/ou de verrouillage réussi du véhicule partagé, ou des informations indiquant qu'une vitesse de déplacement est inférieure à un seuil de vitesse prédéfini, ou des informations indiquant que la vitesse de déplacement est inférieure au seuil de vitesse prédéfini et que l'état se maintient pendant un premier seuil de temps prédéfini, ou des informations indiquant qu'un rayon d'une zone de déplacement est inférieur à un seuil de rayon prédéfini et que l'état se maintient pendant un deuxième seuil de temps prédéfini, ou des informations indiquant que la vitesse de déplacement est inférieure à un rapport prédéfini d'une vitesse de déplacement maximale et que l'état se maintient pendant un troisième seuil de temps prédéfini.

4. Système de véhicule partagé selon la revendication 3, **caractérisé en ce que** le véhicule partagé (400) comprend une unité de communication (401) configurée pour envoyer les informations de déverrouillage réussi et/ou de verrouillage réussi de sorte que le serveur (300) acquiert les informations d'événement de déplacement de l'utilisateur.

5. Système de véhicule partagé selon la revendication 3 ou 4, **caractérisé en ce que** le dispositif applicatif pour le véhicule partagé (200) comprend en outre :
une unité d'invite configurée pour envoyer un son d'invite ou une vibration pour inviter l'utilisateur à vérifier les informations de service autour de la position de l'utilisateur.

6. Dispositif applicatif pour un véhicule partagé (200), comprenant une mémoire et un processeur, dans lequel la mémoire stocke des instructions pour commander le processeur pour réaliser des opérations de manière à exécuter le procédé selon l'une quelconque des revendications 1 à 2.
